# EUROPÄISCHE PATENTSCHRIFT

(11) **EP 4 476 123 B1**
(45) Veröffentlichungstag und Bekanntmachung des Hinweises auf die Patenterteilung: **12.11.2025**
(21) Anmeldenummer: 23701395.8
(22) Anmeldetag: 19.01.2023
(51) Int. Cl.: B62D 25/06, B62D 29/04, B60Q 3/51

(54) **GLASDACHANORDNUNG FÜR EIN KRAFTFAHRZEUG**
GLASS ROOF ASSEMBLY FOR A MOTOR VEHICLE
ENSEMBLE TOIT EN VERRE POUR VÉHICULE AUTOMOBILE

(30) Priorität: 10.02.2022 DE 102022103129
(43) Veröffentlichungstag der Anmeldung: 18.12.2024
(73) Patentinhaber: Bayerische Motoren Werke Aktiengesellschaft, 80809 München (DE)
(72) Erfinder: BIECKER, Peter, 82041 Deisenhofen bei München (DE)
(86) Internationale Anmeldenummer: PCT/EP2023/051226
(87) Internationale Veröffentlichungsnummer: WO 2023/151917

(56) Entgegenhaltungen:
- WO-A1-2018/219657
- DE-A1- 102015 219 586
- DE-A1- 102019 212 088
- US-A1- 2011 273 874

## Beschreibung

Die vorliegende Erfindung betrifft eine Glasdachanordnung für ein Kraftfahrzeug.

Glasdachanordnungen für Kraftfahrzeuge sind in verschiedenen Ausgestaltungen aus dem Stand der Technik bekannt.

Die DE 10 2019 212 088 A1 beschreibt eine Glasdachanordnung mit einem Glaselement, einer Führungsschienenanordnung und einem Dachhimmel. Die Führungsschienenanordnung ist an dem Glaselement fixiert. Zur Befestigung des Dachhimmels weist die Glasdachanordnung ein Befestigungselement auf. Das Befestigungselement ist fest mit dem Dachhimmel verbunden und an der Führungsschienenanordnung befestigbar.

Bei der aus der DE 10 2019 212 088 A1 bekannten Glasdachanordnung ist jedoch nicht mit einer Lichtquelle ausstattbar.

Aus der US 2011/273874 A1 ist eine Glasdachanordnung für ein Kraftfahrzeug bekannt. Diese hat eine Dachverglasung, eine Lichtquellenaufnahme, ein Rastelement und ein Rastgegenelement, wobei die Lichtquellenaufnahme an der Dachverglasung fixiert ist, das Rastgegenelement an der Lichtquellenaufnahme ausgebildet ist und das Rastelement mit dem Rastgegenelement in Eingriff ist, wobei die Lichtquellenaufnahme eine Aussparung umfasst, in der eine Lichtquelle anordbar ist.

Es ist eine Aufgabe der vorliegenden Erfindung eine Glasdachanordnung für ein Kraftfahrzeug bereitzustellen, welche mit und ohne Lichtquelle verwendbar und somit modular einsetzbar ist.

Diese Aufgabe wird erfindungsgemäß durch die Glasdachanordnung für ein Kraftfahrzeug mit den Merkmalen des Patentanspruchs 1 gelöst.

Erfindungsgemäß wird also eine Glasdachanordnung für ein Kraftfahrzeug bereitgestellt, die eine Dachverglasung, einen (Kraftfahrzeug-)Himmel, eine Lichtquellenaufnahme, ein Rastelement und ein Rastgegenelement umfasst. Das Rastelement ist an dem Himmel ausgebildet, d.h. entweder Bestandteil des Himmels oder an dem Himmel fest fixiert. Das Rastgegenelement ist an der Lichtquellenaufnahme ausgebildet, d.h. entweder Bestandteil der Lichtquellenaufnahme oder an der Lichtquellenaufnahme fest fixiert. Das Rastelement ist mit dem Rastgegenelement zur Fixierung des Himmels an der Lichtquellenaufnahme und somit an der Dachverglasung in Eingriff. Die Lichtquellenaufnahme umfasst eine Aussparung, in der eine Lichtquelle anordbar ist.

Kerngedanke der Erfindung ist es also die Lichtquellenaufnahme, über welche der Himmel an der Dachverglasung fixiert ist mit einer Aussparung für eine Lichtquelle zu versehen.

Die erfindungsgemäße Glasdachanordnung kann somit mit und ohne Lichtquelle verwendet werden und ist mithin modular für unterschiedliche Anforderungen einsetzbar.

Der Begriff "Himmel" beschreibt im Rahmen der vorliegenden Erfindung eine Verkleidung einer Innenseite eines Dachbereichs des Kraftfahrzeugs.

Die Dachverglasung ist beispielsweise an der Karosserie des Kraftfahrzeugs fixierbar, insbesondere verklebbar.

Die Lichtquellenaufnahme kann an der Unterseite der Dachverglasung fixiert sein, welche einem Innenraum des Kraftfahrzeugs zugewandt ist.

Bei einer bevorzugten Ausführungsform der Glasdachanordnung nach der Erfindung ist die Lichtquellenaufnahme in einem ersten Anbindungsbereich, insbesondere mittels einer Verklebung an der Unterseite der Dachverglasung des Kraftfahrzeugs fixiert.

Die Aussparung ist beispielsweise in Glasdachanordnung-Hochrichtung oben von der Dachverglasung begrenzt.

Das Rastelement kann eine Rastnase sein und das Rastgegenelement kann ein Hinterschnitt sein.

Bei einer bevorzugten Ausführungsform umfasst die Glasdachanordnung nach der Erfindung eine Lichtquelle, die in der Aussparung der Lichtquellenaufnahme angeordnet ist.

Bei einer beispielshaften Ausführungsform umfasst die Glasdachanordnung nach der Erfindung eine Lichtabschirmung zur Abschirmung von Licht, insbesondere von Streulicht der Lichtquelle.

Wenn in der Aussparung der Lichtquellenaufnahme die Lichtquelle angeordnet ist, umfasst die Glasdachanordnung beispielsweise eine lichtleitende Glasscheibe mit Auskopplungsmitteln.

Die lichtleitende Glasscheibe kann zusammen mit der Lichtabschirmung einen Hohlraum zwischen der Lichtquellenaufnahme und der Dachverglasung schließen, der die Aussparung mit einem Innenraum des Kraftfahrzeugs verbindet.

Über die Auskopplungsmittel kann ein durch die lichtleitende Glasscheibe geleitetes Licht aus der lichtleitenden Glasscheibe in den Innenraum austreten.

Die lichtleitende Glasscheibe ist beispielsweise an einer dem Innenraum des Kraftfahrzeugs zugewandten Seite der Dachverglasung fixiert.

Die Lichtabschirmung kann zwischen der lichtleitenden Glasscheibe und der Lichtquellenaufnahme angeordnet sein.

Die Lichtabschirmung ist beispielsweise lichtundurchlässig.

Beispielsweise ist die Lichtquellenaufnahme in einem zweiten Anbindungsbereich mittels der Streulichtabdichtung an der lichtleitenden Glasscheibe und somit an der Dachverglasung fixiert.

Der erste Anbindungsbereich unterscheidet sich beispielsweise von dem zweiten Anbindungsbereich.

Der erste Anbindungsbereich kann, insbesondere in Glasdachanordnung-Querrichtung und/oder in Glasdachanordnung-Längsrichtung weiter außen angeordnet sein als der zweite Anbindungsbereich.

Die Lichtabschirmung, die Lichtquellenaufnahme und/oder die Verklebung, mittels welcher die Lichtquellenaufnahme in dem ersten Anbindungsbereich an der Dachverglasung fixiert ist, fangen bzw. fängt beispielsweise Licht, insbesondere Streulicht der Lichtquelle derart ab, dass Licht der Lichtquelle lediglich über die lichtleitende Glasscheibe in einen Innenraum des Kraftfahrzeugs und/oder auf die Rückseite des Himmels gelangt, welche dem Innenraum des Kraftfahrzeugs abgewandt ist.

Die Lichtquellenaufnahme und/oder die Verklebung können bzw. kann also ebenfalls (jeweils) als Lichtabschirmung dienen, d.h. lichtundurchlässig sein.

Die Lichtabschirmung, die Lichtquellenaufnahme und/oder die Verklebung hindern also beispielsweise Licht, insbesondere Streulicht der Lichtquelle davor, anders als über die lichtleitende Glasscheibe in den Innenraum des Kraftfahrzeugs und/oder auf die Rückseite des Himmels zu gelangen.

Bei einer beispielhaften Ausführungsform der Glasdachanordnung nach der Erfindung ist die Lichtquelle in der Lichtquellenaufnahme fixiert. Insbesondere ist die Lichtquelle mit der Lichtquellenaufnahme verklebt.

Wenn die Aussparung der Lichtquellenaufnahme frei von einer Lichtquelle ist, d.h. keine Lichtquelle in der Aussparung angeordnet ist, umfasst die Glasdachanordnung beispielsweise ein Distanzelement.

Die Lichtabschirmung und das Distanzelement verbinden beispielsweise in dem zweiten Anbindungsbereich die Lichtquellenaufnahme mit der Dachverglasung. Die Lichtabschirmung und das Distanzelement schließen also beispielsweise einen Hohlraum zwischen der Lichtquellenaufnahme und der Dachverglasung, über welchen die Aussparung mit einem Innenraum des Kraftfahrzeugs verbunden ist.

Die Lichtabschirmung kann, insbesondere mit seiner Unterseite an der Lichtquellenaufnahme und, insbesondere mit seiner Oberseite an dem Distanzelement anliegen.

Das Distanzelement liegt beispielsweise, insbesondere mit seiner Unterseite an der Lichtabschirmung an und, insbesondere mit seiner Oberseite an der Dachverglasung an.

Der Hohlraum zwischen der Lichtquellenaufnahme und der Dachverglasung, über welchen die Aussparung mit dem Innenraum des Kraftfahrzeugs verbunden ist, kann also entweder über die Lichtabschirmung und die lichtleitende Glasscheibe oder über die Lichtabschirmung und das Distanzelement verschlossen sein.

Insbesondere ist die Lichtquellenaufnahme und die Dachverglasung in dem zweiten Anbindungsbereich also über die Lichtabschirmung und die lichtleitende Glasscheibe verbunden bzw. der Hohlraum zwischen diesen verschlossen, wenn in der Lichtquellenaufnahme eine Lichtquelle angeordnet ist.

Ist in der Lichtquellenaufnahme keine Lichtquelle angeordnet, sind die Lichtquellenaufnahme und die Dachverglasung in dem zweiten Anbindungsbereich insbesondere über die Lichtabschirmung und das Distanzelement miteinander verbunden.

Die Glasdachanordnung ist somit sowohl mit als auch ohne Lichtquelle verwendbar.

Bei einer beispielhaften Ausführungsform umfasst die Glasdachanordnung nach der Erfindung eine Umschäumung, welche die Dachverglasung zumindest teilweise umfangsseitig umgibt.

Das Distanzelement ist Bestandteil der Lichtabschirmung.

Das Distanzelement kann aus dem gleichen Material und/oder mit dem gleichen Verfahren hergestellt sein wie die Umschäumung.

Das Distanzelement kann ein Kunststoffspritzgussteil sein, dass mit der Dachverglasung verklebt ist.

Bei einer bevorzugten Ausführungsform der Glasdachanordnung nach der Erfindung erstreckt sich die Lichtquellenaufnahme, insbesondere die Aussparung in Glasdachanordnung-Längsrichtung.

Bei einer beispielhaften Ausführungsform der Glasdachanordnung nach der Erfindung erstreckt sich die Lichtquellenaufnahme, insbesondere die Aussparung in Glasdachanordnung-Querrichtung.

Die die Lichtaufnahmequelle, insbesondere die Aussparung kann sich über annähernd die gesamte Länge oder Breite der Dachverglasung oder über Teilbereiche der Dachverglasung erstrecken.

Die Lichtquellenaufnahme ist beispielsweise in einem Randbereich der Dachverglasung angeordnet.

Die Lichtquellenaufnahme kann sich durchgängig, insbesondere über den gesamten Randbereich der Dachverglasung erstrecken.

Die Lichtquellenaufnahme kann also zwei sich in Glasdachanordnung-Längsrichtung erstreckende Bereiche und zwei sich in Glasdachanordnung-Querrichtung erstreckende Bereiche umfassen.

Die sich in Glasdachanordnung-Längsrichtung erstreckenden Bereiche können endseitig jeweils mit Enden der sich in Glasdachanordnung-Querrichtung erstreckenden Bereiche verbunden sein. Die Lichtquellenaufnahme kann also eine Art Rahmen bilden, der auf der Unterseite der Dachverglasung anliegt.

Die Erfindung ist im Folgenden anhand in der Zeichnung dargestellter Ausführungsbeispiele näher erläutert. Es zeigt:
- **Fig. 1**: eine Schnittansicht einer ersten Glasdachanordnung nach der Erfindung; und
- **Fig. 2**: eine Schnittansicht einer zweiten Glasdachanordnung nach der Erfindung.

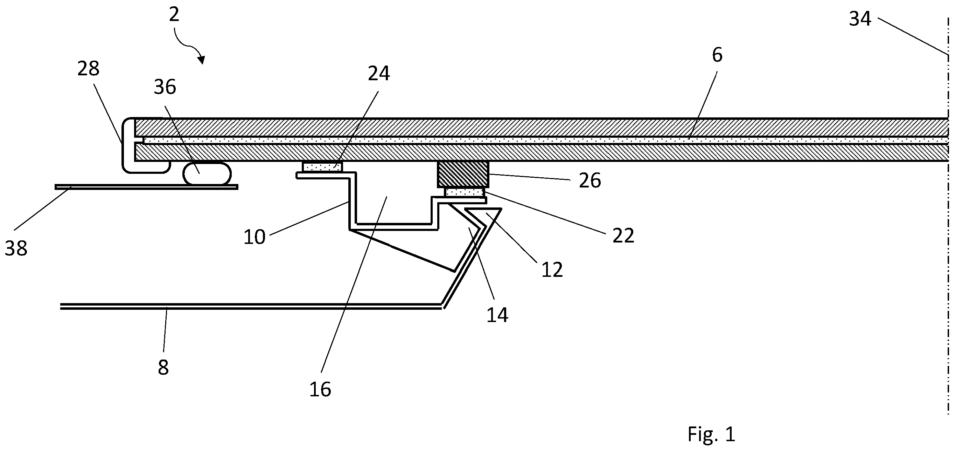

In **Figur 1** ist eine Schnittansicht eines Schnittes in Glasdachanordnung-Querrichtung einer ersten Glasdachanordnung 2 nach der Erfindung dargestellt.

Da die erste Glasdachanordnung 2 spiegelsymmetrisch zu einer Glasdachanordnung-Längsmittelebene 34 ausgebildet ist, ist in Figur 1 lediglich eine linke Seite der ersten Glasdachanordnung 2 dargestellt. Auf eine Darstellung der rechten Seite der ersten Glasdachanordnung 2 wurde verzichtet. Entsprechend beschränken sich auch die folgenden Ausführungen auf die linke Seite der ersten Glasdachanordnung 2. Die Ausführungen gelten entsprechend für die rechte Seite der ersten Glasdachanordnung 2.

Die erste Glasdachanordnung 2 umfasst eine Dachverglasung 6, einen Himmel 8 und eine Lichtquellenaufnahme 10 mit einer Aussparung 16. Die Aussparung 16 erstreckt sich in Glasdachanordnung-Längsrichtung und weist ein rechteckiges Profil auf. In der Aussparung 16 ist bei Bedarf eine Lichtquelle 18 anordbar.

Die Dachverglasung 6 ist über eine Verklebung 36 fest an einer Karosserie 38 des Kraftfahrzeugs fixiert. Die Verklebung 36 ist an der Unterseite der Dachverglasung 6 angeordnet und erstreckt sich umlaufend.

An der Außenumfangsfläche der Dachverglasung 6 ist eine Umschäumung 28 vorgesehen. Die Umschäumung 28 erstreckt sich über die gesamte Außenumfangsfläche der Dachverglasung 6.

Die Lichtquellenaufnahme 10 ist in einem ersten Anbindungsbereich über eine weitere Verklebung 24 an der Dachverglasung 6 fixiert.

In einem zweiten Anbindungsbereich, welcher weiter innen, d.h. vorliegend näher an der Glasdachanordnung-Längsmittelebene 34 angeordnet ist als der erste Anbindungsbereich, ist die Lichtquellenaufnahme 10 über eine Lichtabschirmung 22 und ein Distanzelement 26 an der Dachverglasung 6 fixiert.

Hierbei liegt die Lichtabschirmung 22 mit der Unterseite an der Lichtquellenaufnahme 10 und mit der Oberseite an dem Distanzelement 26 an. Das Distanzelement 26 liegt wiederum mit der Unterseite an der Lichtabschirmung 22 und mit der Oberseite an der Dachverglasung 6 an. Die Lichtabschirmung 22 und das Distanzelement 26 schließen somit einen Hohlraum zwischen der Dachverglasung 6 und der Lichtquellenaufnahme 10, welcher die Aussparung 16 mit einem Innenraum des Kraftfahrzeugs verbindet.

Zur Fixierung des Himmels 8 an der Lichtquellenaufnahme 10 umfasst der Himmel 8 ein Rastelement 12 und die Lichtquellenaufnahme 10 ein Rastgegenelement 14. Das Rastelement 12 und das Rastgegenelement 14 sind derart in Eingriff, dass der Himmel 8 an der Lichtquellenaufnahme 10 gesichert ist.

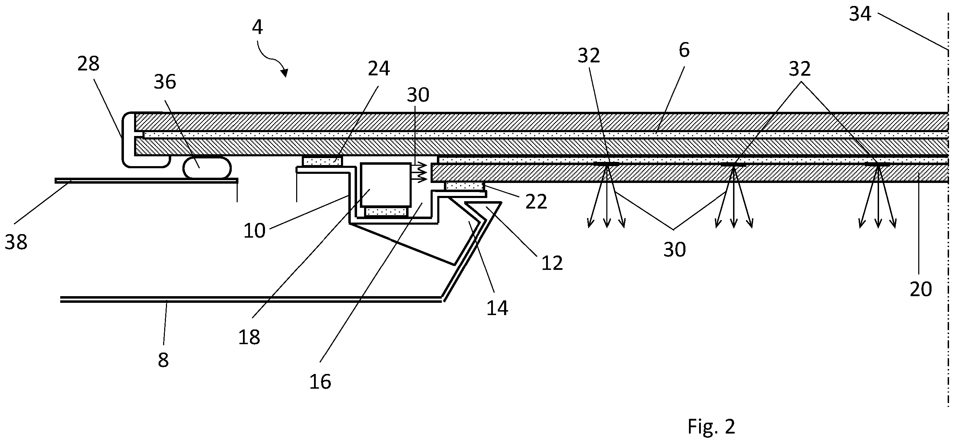

In **Figur 2** ist eine Figur 1 entsprechende Ansicht einer zweiten Glasdachanordnung 4 nach der Erfindung dargestellt. Die zweite Glasdachanordnung 4 entspricht im Wesentlichen der in Figur 1 dargestellten ersten Glasdachanordnung 2. Aus diesem Grund sind im Folgenden lediglich die Unterscheidungsmerkmale erläutert. Für alle weiteren Merkmale gelten die obigen Ausführungen betreffend die in Figur 1 dargestellte erste Glasdachanordnung 2 entsprechend.

Anstelle des Distanzelements 26 umfasst die zweite Glasdachanordnung 4 eine lichtleitende Glasscheibe 20 mit Auskopplungsmitteln 32. Zwischen der Lichtabschirmung 22 und der Dachverglasung 6 ist also nicht wie bei der ersten Glasdachanordnung 2 das Distanzelement 26, sondern die lichtleitende Glasscheibe 20 angeordnet.

In der Aussparung 16 der Lichtquellenaufnahme 10 ist eine Lichtquelle 18 vorgesehen, welche im betätigten Zustand Lichtstrahlen 30 abgibt. Die Lichtstrahlen 30 der Lichtquelle 18 werden durch die lichtleitende Glasscheibe 20 geleitet. Die Auskopplungsmittel 32 ermöglichen einen Austritt der Lichtstrahlen 30 aus der lichtleitenden Glasscheibe 20 in den Innenraum des Kraftfahrzeugs.

Die Lichtquellenaufnahme 10, die Lichtabschirmung 22 und die Verklebung 24 sind lichtundurchlässig ausgestaltet, so dass keine Lichtstrahlen 30 der Lichtquelle 18 durch diese hindurchtreten können. Die Lichtquellenaufnahme 10, die Lichtabschirmung 22 und die Verklebung 24 stellen somit sicher, dass ausschließlich über die lichtleitende Glasscheibe 20, insbesondere die Auskopplungsmittel 32 Lichtstrahlen 30 der Lichtquelle 18 in den Innenraum des Kraftfahrzeugs gelangen.

### Bezugszeichenliste:

- 2: ersten Glasdachanordnung
- 4: zweite Glasdachanordnung
- 6: Dachverglasung
- 8: Himmel
- 10: Lichtquellenaufnahme
- 12: Rastelement
- 14: Rastgegenelement
- 16: Aussparung
- 18: Lichtquelle
- 20: lichtleitende Glasscheibe
- 22: Lichtabschirmung
- 24: Verklebung
- 26: Distanzelement
- 28: Umschäumung
- 30: Lichtstrahl
- 32: Auskopplungsmittel
- 34: Glasdachanordnung-Längsmittelebene
- 36: Verklebung
- 38: Karosserie

## Patentansprüche

1. Glasdachanordnung für ein Kraftfahrzeug, umfassend eine Dachverglasung (6), einen Himmel (8), eine Lichtquellenaufnahme (10), ein Rastelement (12) und ein Rastgegenelement (14), wobei die Lichtquellenaufnahme (10) an der Dachverglasung (6) fixiert ist, das Rastelement (12) an dem Himmel (8) ausgebildet ist, das Rastgegenelement (14) an der Lichtquellenaufnahme (10) ausgebildet ist und das Rastelement (12) mit dem Rastgegenelement (14) in Eingriff ist, wobei die Lichtquellenaufnahme (10) eine Aussparung (16) umfasst, in der eine Lichtquelle (18) anordbar ist.

2. Glasdachanordnung nach Anspruch 1, wobei die Aussparung (16) in Glasdachanordnung-Hochrichtung oben von der Dachverglasung (6) begrenzt ist.

3. Glasdachanordnung nach Anspruch 1 oder 2, wobei die Lichtquellenaufnahme (10) mittels einer Verklebung (24) an der Dachverglasung (6) in einem ersten Anbindungsbereich fixiert ist.

4. Glasdachanordnung nach einem der Ansprüche 1 bis 3, ferner aufweisend eine Lichtquelle (18), welche in der Aussparung (16) der Lichtquellenaufnahme (10) angeordnet ist, eine lichtleitende Glasscheibe (20) und eine Lichtabschirmung (22), wobei die Lichtquellenaufnahme (10), die Lichtabschirmung (22) und/oder die Verklebung (24) Licht der Lichtquelle (18) derart abfangen bzw. abfängt, dass Licht der Lichtquelle (18) lediglich über die lichtleitende Glasscheibe (20) in einen Innenraum des Kraftfahrzeugs und/oder auf die Rückseite des Himmels (8) gelangt.

5. Glasdachanordnung nach einem der Ansprüche 1 bis 3, ferner aufweisend eine Lichtabschirmung (22) und ein Distanzelement (26), welche die Lichtquellenaufnahme (10) mit der Dachverglasung (6) in einem zweiten Anbindungsbereich verbinden, wenn die Lichtquellenaufnahme (10) frei von einer Lichtquelle (18) ist.

6. Glasdachanordnung nach Anspruch 5, wobei das Distanzelement (26) Bestandteil der Lichtabschirmung (22) ist, dass das Distanzelement (26) ein Kunststoffspritzgussteil ist, das mit der Dachverglasung (6) verklebt ist, oder dass die Glasdachanordnung (2, 4) eine Umschäumung (28) umfasst, welche die Dachverglasung (6) umfangsseitig umgibt, wobei das Distanzelement (26) aus dem gleichen Material und mit dem gleichen Verfahren hergestellt ist wie die Umschäumung (28).

7. Glasdachanordnung nach einem der Ansprüche 1 bis 6, wobei sich die Lichtquellenaufnahme (10) in Glasdachanordnung-Längsrichtung und/oder Glasdachanordnung-Querrichtung erstreckt.

8. Glasdachanordnung nach einem der Ansprüche 1 bis 7, wobei die Aussparung (16) ein rechteckiges Profil aufweist.

9. Glasdachanordnung nach einem der Ansprüche 1 bis 8, wobei Dachverglasung (6) an einer Karosserie (38) des Kraftfahrzeugs fixierbar ist.

## Claims

1. Glass roof arrangement for a motor vehicle, comprising a roof glazing (6), a headliner (8), a light source receptacle (10), a locking element (12) and a counter-locking element (14), wherein the light source receptacle (10) is fixed to the roof glazing (6), the locking element (12) is formed on the headliner (8), the counter-locking element (14) is formed on the light source receptacle (10) and the locking element (12) is in engagement with the counter-locking element (14), wherein the light source receptacle (10) comprises a recess (16) in which a light source (18) can be arranged.

2. Glass roof arrangement according to claim 1, wherein the recess (16) is limited at the top in the glass roof arrangement's vertical direction by the roof glazing (6).

3. Glass roof arrangement according to claim 1 or 2, wherein the light source receptacle (10) is fixed to the roof glazing (6) by means of an adhesive bond (24) in a first connection area.

4. Glass roof arrangement according to any one of claims 1 to 3, further comprising a light source (18) which is arranged in the recess (16) of the light source receptacle (10), a light-guiding glass pane (20) and a light shield (22), wherein the light source receptacle (10), the light shield (22) and/or the adhesive bond (24) intercept(s) light from the light source (18) in such a way that light from the light source (18) only reaches an interior of the motor vehicle and/or the rear side of the headliner (8) via the light-guiding glass pane (20).

5. Glass roof arrangement according to any one of claims 1 to 3, further comprising a light shield (22) and a spacer element (26) which connect the light source receptacle (10) to the roof glazing (6) in a second connection area when the light source receptacle (10) is free of a light source (18).

6. Glass roof arrangement according to claim 5, wherein the spacer element (26) is a component of the light shield (22), wherein the spacer element (26) is a plastic injection molded part that is adhesively bonded to the roof glazing (6), or wherein the glass roof arrangement (2, 4) comprises a foam encapsulation (28) which surrounds the roof glazing (6) on its periphery, wherein the spacer element (26) is made of the same material and by the same process as the foam encapsulation (28).

7. Glass roof arrangement according to any one of claims 1 to 6, wherein the light source receptacle (10) extends in the glass roof arrangement's longitudinal direction and/or transverse direction.

8. Glass roof arrangement according to any one of claims 1 to 7, wherein the recess (16) has a rectangular profile.

9. Glass roof arrangement according to any one of claims 1 to 8, wherein the roof glazing (6) can be fixed to a body (38) of the motor vehicle.

## Revendications

1. Agencement de toit en verre pour un véhicule automobile, comprenant un vitrage de toit (6), un ciel de toit (8), un réceptacle de source lumineuse (10), un élément d'enclenchement (12) et un élément d'enclenchement complémentaire (14), dans lequel le réceptacle de source lumineuse (10) est fixé au vitrage de toit (6), l'élément d'enclenchement (12) est formé sur le ciel de toit (8), l'élément d'enclenchement complémentaire (14) est formé sur le réceptacle de source lumineuse (10) et l'élément d'enclenchement (12) est en engagement avec l'élément d'enclenchement complémentaire (14), dans lequel le réceptacle de source lumineuse (10) comprend un évidement (16) dans lequel une source lumineuse (18) peut être agencée.

2. Agencement de toit en verre selon la revendication 1, dans lequel l'évidement (16) est limité en haut dans la direction verticale de l'agencement de toit en verre par le vitrage de toit (6).

3. Agencement de toit en verre selon la revendication 1 ou 2, dans lequel le réceptacle de source lumineuse (10) est fixé au vitrage de toit (6) au moyen d'un collage (24) dans une première zone de liaison.

4. Agencement de toit en verre selon l'une quelconque des revendications 1 à 3, comprenant en outre une source lumineuse (18) qui est agencée dans l'évidement (16) du réceptacle de source lumineuse (10), une vitre conductrice de lumière (20) et un écran de lumière (22), dans lequel le réceptacle de source lumineuse (10), l'écran de lumière (22) et/ou le collage (24) intercepte(nt) la lumière de la source lumineuse (18) de telle sorte que la lumière de la source lumineuse (18) n'atteigne l'intérieur du véhicule automobile et/ou le côté arrière du ciel de toit (8) que par l'intermédiaire de la vitre conductrice de lumière (20).

5. Agencement de toit en verre selon l'une quelconque des revendications 1 à 3, comprenant en outre un écran de lumière (22) et un élément d'espacement (26) qui relient le réceptacle de source lumineuse (10) au vitrage de toit (6) dans une deuxième zone de liaison lorsque le réceptacle de source lumineuse (10) est dépourvu de source lumineuse (18).

6. Agencement de toit en verre selon la revendication 5, dans lequel l'élément d'espacement (26) fait partie intégrante de l'écran de lumière (22), dans lequel l'élément d'espacement (26) est une pièce en plastique moulée par injection qui est collée au vitrage de toit (6), ou dans lequel l'agencement de toit en verre (2, 4) comprend un encapsulage en mousse (28) qui entoure le vitrage de toit (6) sur sa périphérie, l'élément d'espacement (26) étant fabriqué avec le même matériau et selon le même procédé que l'encapsulage en mousse (28).

7. Agencement de toit en verre selon l'une quelconque des revendications 1 à 6, dans lequel le réceptacle de source lumineuse (10) s'étend dans la direction longitudinale et/ou transversale de l'agencement de toit en verre.

8. Agencement de toit en verre selon l'une quelconque des revendications 1 à 7, dans lequel l'évidement (16) présente un profil rectangulaire.

9. Agencement de toit en verre selon l'une quelconque des revendications 1 à 8, dans lequel le vitrage de toit (6) peut être fixé à une carrosserie (38) du véhicule automobile.
